Europäisches Patentamt

European Patent Office

Office européen des brevets

(19)

(11) Veröffentlichungsnummer: **0 073 296 B2**

(12)

# NEUE EUROPÄISCHE PATENTSCHRIFT

(45) Veröffentlichungstag der neuen Patentschrift:
06.03.91 Patentblatt 91/10

(51) Int. Cl.$^5$: **C08F 20/12**

(21) Anmeldenummer: **82104299.1**

(22) Anmeldetag: **17.05.82**

(54) **Verfahren zur Herstellung von Acrylkunststoffdispersionen.**

Die Akte enthält technische Angaben, die nach dem Eingang der Anmeldung eingereicht wurden und die nicht in dieser Patentschrift enthalten sind.

(30) Priorität : **29.08.81 DE 3134222**

(43) Veröffentlichungstag der Anmeldung :
**09.03.83 Patentblatt 83/10**

(45) Bekanntmachung des Hinweises auf die Patenterteilung :
**15.10.86 Patentblatt 86/42**

(45) Bekanntmachung des Hinweises auf die Entscheidung über den Einspruch :
**06.03.91 Patentblatt 91/10**

(84) Benannte Vertragsstaaten :
**DE FR GB IT NL**

(56) Entgegenhaltungen :
**EP-A- 11 806**
**FR-A- 2 031 312**
**US-A- 2 372 108**

(73) Patentinhaber : **Röhm GmbH**
**Kirschenallee Postfach 4242**
**W-6100 Darmstadt 1 (DE)**

(72) Erfinder : **Siol, Werner, Dr.**
**Gördeler Weg 34**
**W-6100 Darmstadt-Eberstadt (DE)**
Erfinder : **Rauch, Hubert**
**Odenwaldstrasse 6**
**W-6108 Weiterstadt (DE)**
Erfinder : **Sütterlin, Norbert, Dr.**
**Am Horeth 23**
**W-6105 Ober-Ramstadt (DE)**

EP 0 073 296 B2

## Beschreibung

### Technisches Gebiet

Die Erfindung betrifft ein Verfahren zur Herstellung von wäßrigen Kunststoffdispersionen, deren Kunststoffanteil übewiegend, d.h. zu mehr als 50 Gew.-%, aus Acrylmonomeren aufgebaut ist, nach dem Monomerzulaufverfahren. Bei diesem Verfahren wird eine homogene flüssige Monomerenphase, die außer Acrylmonomeren und gegebenenfalls geringeren Mengen an anderen Monomeren weitere darin gelöste Stoffe enthalten kann, in Gegenwart eines radikalbildenden Initiators und eines Emulgiermittels unter Polymerisationsbedingungen zu einer vorgelegten Wasserphase zulaufen gelassen.

### Stand der Technik

Ein Monomerzulaufverfahren zur Herstellung von Acrylkunststoffdispersionen ist aus der DE-pS 2 135 073 bekannt. Man läßt während der Polymerisation ein Monomerengemisch zu einer Wasserphase, in der ein Initiator und ein Emulgiermittel gelöst sind, allmählich zulaufen. Bei diesem Verfahren bilden sich leicht, besonders bei hohem Feststoffgehalt der hergestellten Dispersion, störende Mengen an Koagulat.

Aus der DE-PS 1 119 513 ist es bekannt, bei einem solchen Verfahren gleichzeitig mit der Monomerenphase, aber getrennt davon wäßrige Lösungen des Initiators und des Emulgiermittels allmählich zuzudosieren. Auch dieses Verfahren neigt zur Koagulatbildung.

Bei der Herstellung von wäßrigen Kunststoffdispersionen auf Basis von Vinylaromaten ist es gemäß GB-PS 713 492 bekannt, das Emulgiermittel im der Monomerenphase zu lösen und diese allmählich unter Polymerisationsbedingungen zu einer emulgiermittelfreien Wasserphase zu geben. Gleichzeitig läßt man getrennt davon eine wäßrige Initiatorlösung zulaufen. Dieses Verfahren ergibt dünnflüssige, sehr grobteilige Kunststoffdispersionen auf Basis von Vinylaromaten, die wegen ihrer geringen Viskosität und hohen Teilchengrößen für viele technische Zwecke nicht geeignet sind.

Aus der FR-A 2 031 312 ist es bekannt, bei der Emulsionspolymerisation von Monomerengemischen, die zu 80 bis 90% aus unpolaren Monomeren bestehen, das Monomerengemich als solches im Laufe der Polymerisation allmählich in das Polymerisationsgemäß einlaufen zu lassen. Dabei kann ein Emulgator in dem Monomerengemisch, sofern er darin löslich ist, gelöst sein.

### Aufgabe und Lösung

Die Herstellung von wäßrigen Kunststoffdispersionen soll durch ein neues Verfahren ohne die erläuterten Nachteile vereinfacht und verbessert werden. Insbesondere sollen Acrylkunststoffdispersionen in wählbarer Teilchengröße ohne störende Koagulatbildung hergestellt werden, auch wenn sie einen hohen Feststoffgehalt oder einen hohen Gehalt an einpolymerisierten Einheiten von wasserlöslichen Monomeren und gegebenenfalls einen niedrigen Emulgiermittelgehalt aufweisen. Die Aufgabe wird durch das Verfahren gemäß Hauptanspruch gelöst.

### Gewerbliche Varwartbarkeit und Vorteile

Nach den bisher gebräuchlichen Verfahren der Emulsionspolymerisation, etwa den Emulsionszulaufverfahren, lassen sich Dispersionen von begrenztem Feststoffgehalt oder einem niedrigen Gehalt an Carbonsäuregruppen gut herstellen, insbesondere wenn große Emulgiermittelmengen eingesetzt werden dürfen.

Dagegen bereitet es Schwierigkeiten, bei diesen Verfahren, vor allem bei Einsatz geringer Emulgiermittelmengen, den Feststoffgehalt auf 55 Gew.-% oder darüber zu steigern, oder mehr als 6 Gew.-% insorbesondere mehr als 10 Gew.-%, an wasserlöslichen Monomeren einzubauen und gleichzeitig die Teilchengröße nach Wunsch einzustellen. Hochkonzentrierte Dispersionen sind wegen des – in Bezug auf den Kunststoffgehalt – verminderten Gewichts und Volumens und wegen des verminderten Energiebedarfs bei der Sprühtrocknung oder der Trocknung imprägnierter Güter ewrünscht. Nach dem Verfahren der Erfindung lassen sich Feststoffgehalte von z.B. 64 Gew.-% auch bei niedrigen Emulgiermittelkonzentrationen erreichen.

Dispersionen mit einem hohen Gehalt an eingebauten Einheiten von wasserlöslichen Monomeren werden beispielsweise als Überzugsmittel für Arzneiformen benötigt. Sie lassen sich nach dem Emulsionszulaufverfahren oder dem "Eintopfverfahren" nur schwierig herstellen, denn schon die Bildung einer Monomerenemulsion ist schwierig. Man benötigt hohe Emulgatorkonzentrationen, was die Bildung sehr kleiner Latexteilchen fördert. Durch Entstehung von Latexteilchen von ungleicher chemischer Zusammensetzung kommt es zu Unverträglichkeiten und in Folge davon zu Koagulatbildung. Dagegen lassen sich nach dem erfindungsgemäßen Verfahren Dispersionen mit hohen Anteilen an ungesättigten Carbonsäuren oder anderen wasserlöslichen Monomeren ohne Schwierigkeiten und unter Vermeidung störender Koagulatbildung herstellen. Man kommt mit sehr geringen Emulgiermittelmengen aus und hat es durch die Aufteilung des Emulgiermittels auf die vorgelegte Wasserphase und die zulaufende Monomerphase in der Hand, die Teilchengröße des Latex in weiten Grenzen beliebig einzustellen. Die Teilchengröße gehört zu den wichtigsten Parametern, die die anwendungstechnischen Eigenschaften der Dispersionen, z.B. ihre Viskosität, ihre Beständigkeit oder ihre Filmbildungseigenschaften bestimmen.

## Zusammensetzumg der Monomerenphase

Sie besteht überwiegend aus Acrylmonomeren. Darunter werden Acryl- und Methacrylsäure, ihre Nitrile, ihre gegebenenfalls N-substituierten Amide, wie N-Methylolamide, N-Methylolätheramide, N-Aminoalkylamide, sowie die Ester dieser Säuren verstanden. Die Ester können sich von aliphatischen Alkoholen ableiten und gegebenenfalls weitere funktionelle Gruppen im Alkoholrest enthalten, z.B. Hydroxylgruppen, Äthergruppen, Dialkylaminogruppen, Trialkylammoniumsalzgruppen, Epoxidgruppen oder Carboxyl- oder Sulfonsäuregruppen oder deren Salzform enthalten.

Diese Acrylmonomeren bilden mehr als 50 Gew.-%, vorzugsweise 60 bis 100 Gew.-%, der Monomerenphase. Daneben können andere, mit den Acrylmonomeren mischpolymerisierbare Monomere mitverwendet werden, z.B. Styrol, Vinyltoluol, α-Methylstyrol, N-Vinylpyrrolidon, Vinylimidazol, Vinylimidazolin, Vinylimidazolidin, Maleinsäure und Fumarsäure und ihre Ester oder Halbester, Olefine und Diene, Vinylester, Vinylchlorid und Vinylidenchlorid.

Wenigstens ein Teil der Monomeren muß wasserunlöslich sein, damit sich überhaupt Latexteilchen bilden können. Als wasserunlöslich werden Monomere bezeichnet, die bei Raumtemperatur zu weniger als 10 Gew.-% wasserlöslich sind. Ihr Anteil an der Monomerenphase liegt in der Regel nicht unter 30 Gew.-% umd vorzugsweise nicht unter 45 Gew.-%, kann aber auch 100 % erreichen. Hierzu gehören u.a. die Alkylester der Acryl- und Methacrylsäure mit z.B. 1 bis 18 C-Atomen im Alkylrest, Acryl- oder Methacrylnitril und Styrol.

Wasserlösliche Comonomere, die bei Raumtemperatur wenigstens 10 Gew.-prozentige Lösungen zu bilden vermögen, können in solcher Menge in der Monomerenphase enthalten sein, daß die entstehenden Latexpartikel wenigstens in einem begrenzten pH-Bereich wasserunlöslich sind. Zu den wasserlöslichen Monomeren gehören u.a. Acryl- und Methacrylamd und ihre N-Methylolverbindungen, Hydroxyester der Acryl- oder Methacrylsäure, wie z.B. 2-Hydroxyäthyl-acrylat und -methacrylat, 2-Hydroxypropylacrylat und -methacrylat, 4-Hydroxybutylacrylat und -methacrylat, ferner Aminoalkylester dieser Säuren, wie z.B. Dimethylam inoäthylacrylat uiid -methacrylat, Diäthylam inoäthyl-acrylat und -methacrylat, N-Butylaminoäthylacrylat und -methacrylat, 3-Dimethylamino-2,2-dimethylpropylacrylat und -methacrylat, sowie die Salze dieser Aminoester mit anorganischen oder organischen Säuren oder ihre Quaternierungsprodukte.

Eine bevorzugte Gruppe der wasserlöslichen Comonomeren sind die α, β-äthylenisch ungesättigten Carbonsäuren und gegebenenfalls Dicarbonsäuren, insbesondere Acryl- und Methacrylsäure.

Die Erfindung bietet besondere Vorteile bei der – auf andere Weise schwierigen – Herstellung von Dispersionen, die mehr als 6, vorzugsweise 10 bis 70 und insbesondere 25 bis 55 Gew.-% dieser Säuren oder insgesamt mehr als 10 Gew.-% an wasserlöslichen Monomeren und/oder Acryl-und/oder Methacrylnitril im Kunststoffanteil einpolymerisiert enthalten.

## Emulgiermittel

Beim Verfahren der Erfindung können die bei der Emulsionspolymerisation üblichen anionischen, nichtionischen oder kationischen Emulgiermittel oder deren verträgliche Gemische eingesetzt werden, vorausgesetzt, daß sie sowohl in der Wasserphase als auch in der Monomerenphase ausreichend löslich sind und keine störenden Wechselwirkungen mit den Monomeren oder anderen Zusätzen auftreten. Anionische Emulgiermittel sind bevorzugt. Dazu gehören vor allem die durch Oxäthylierung und Sulfatierung von Alkylphenolen hergestellten Emulgiermittel. Sie leiten sich beispielsweise von Nonylphenol, Isononylphenol oder Triisobutylphenol ab und tragen 5 bis 10 äthylenoxidreste. Weitere Beispiele üblicher Emulgiermittel sind Seifen, Natriumlaurylsulfat umd Paraffinsulfonate. Neben den anionischen werden häufig nichtionische Emulgatoren verwendet, die in der Monomerenphase gelöst werden können.

Die Menge des (insbesondere anionischen) Emulgators kann beim Verfahren sehr niedrig gehalten werden. Man kommt in vielen Fällen mit 0,05 bis 1,5%, oft unter 0,5%, bezogen auf das Gewicht der Monomerenphasp aus, jedoch können auch größere Mengen, z.B. bis zu 2 Gew.-% eines anionischen Emulgators eingesetzt werden. Der Gehalt an nichtionischen Emulgatoren kann Werte von 5 bis 10 Gew.-%, bezogen auf die Wasserphase, erreichen. Die Emulgiermittelmenge, die zu Beginn der Polymerisation in der vorgelegten Wasserphase gelöst wird, hat entscheidenden Einfluß auf die Teilchengräße der entstehenden Dispersion. Je größer die Emulgatorkonzentration ist, um so kleiner werden die entstehenden Latexteilchen. Teilchendurchmesser zwischen 0,05 und 0,2 µm wurden z.B. durch Einsatz von 0,005 bis 0,03 Gew.-% eines anionischen Emulgators in der Wasserphase erhalten.

Eine weitere Emulgatormenge wird in der Monomerenphase gelöst. Diese Menge kann – je nach der gewünschten Teilchengröße – gleichgroß, größer oder kleiner als die in der Wasserphase gelöste Emulgatormenge sein. Es kann sich um das gleiche oder um ein anderes Emulgiermittel handeln. Die in der Wasserphase und der Monomerenphase eingesetzten Emulgiermittelmengen werden vorzugsweise so aufgeteilt, daß 0,5 bis 60 Gew.-% des eingesetzten Emulgiermittels in der Wasserphase und die verbleibenden 99,5 bis 40 Gew.-% im der Monomerenphase gelöst sind. Bei der Herstellung grobteiliger Dispersionen empfiehlt es sich, zu Beginn der Polymerisation eine emulgatorarme Monomerenphase zuzusetzen und den Emulgatorgehalt später zu steigern ; vgl. Beispiele 9 und 10. In den meisten Fällen bereitet es keine Schwierigkeiten, einen Emulgator zu finden, der in der Monomerenphase homogen löslich ist. Im allgemeimen werden keine gleichwertigen Ergebnisse erhalten, wenn man den Emulgator getrennt, beispielsweise als wäßrige Lösung, während der Polymerisation zu dem Ansatz zufügt.

**Arbeitsweise**

In einem Polymerisationsgefäß wird die emulgiermittelhaltige Wasserphase vorgelegt und auf die Polymerisationstemperatur eingestellt. Zweckmäßigerweise setzt man vor Beginn des Monomerzulaufs einen wasserlöslichen radikalbildenden Initiator zu, in der Regel Alkali- oder Ammoniumpersulfat, jedoch kann der Initiator oder ein Teil davon während der Polymerisation gleichmäßig oder portionsweise zugesetzt werden. Die Monomerenphase, die aus dem flüssigen Monomerengemisch und dem darin gelösten Emulgiermittel besteht, wird im Laufe der Polymerisation nach Maßgabe des Umsatzes allmählich hinzugegeben umd laufend mittels eines Rührwerks in der Wasserphase emulgiert. Ein kleiner Teil der Monomeren kann gegebenenfalls vor Polymerisationsbeginn in der Wasserphase emulgiert werden. Am besten läßt man die Monomerenphase im Laufe von 1 bis 5 Stunden mit gleichförmiger Geschwindigkeit zulaufen. Man kann auch mit einem Redox- Initiatorsystem polymerisieren. Das Mengenverhältnis der Wasserphase zur Monomerenphase richtet sich nach dem gewünschten Feststoffgehalt der Dispersion. 50-bis 55 Gew.-prozentige Dispersionen entstehen, wenn man auf 100 Gew.-Teile der Wasserphase 100 bis 120 Gew.-Teile der Monomerenphase einsetzt. Das Verfahren der Erfindung gestattet es jedoch auch, z.B. 150 oder mehr Gew.-Teile Monomerenphase zuzugeben und auf diese Weise Dispersionen mit 60% Feststoffgehalt oder darüber zu erzeugen.

**Bevorzugte Dispersionen nach dem Verfahren dar Erfindung**

Das bekannte Emulsionszulaufverfahren, bei dem die Monomeren als wäßrige Emulsion allmählich in die Vorlage gegeben werden, hat den Vorteil, daß die Wärmekapazität des eingebrachten Wassers einen Teil der Polymerisationswärme aufnimmt, so daß sich die Temperatur leichter beherrschen läßt. Auf diesen Vorteil wird bei dem erfindungsgemäßen Monomerzulaufverfahren verzichtet. Man wird es daher vor allem dann anwenden, wenn diesem Nachteil andere Vorteile gegenüberstehen, z.B. die Herstellung neuer Dispersionen, die auf anderem Wege nicht oder allenfalls mit erheblichen Nachteilen, etwa hoher Koagulatbildung, hergestellt werden können. Dazu gehören

1) Acryldispersionen mit einem Gehalt von mehr als 10 Gew.-%, vorzugsweise mehr als 20 Gew.-%, (bezogen auf das Gewicht des Kunststoffanteils) an einpolymerisierten Monomereneinheiten von wasserlöslichen Monomeren und/oder Acrylund/oder Methacrylnitril oder mehr als 6 Gew.-% an Einheiten einer ungesättigten polymerisierbaren Carbonsäure, die einen Kunststoffgehalt von mehr als 40 Gew.-%, bezogen auf das Gesamtgewicht, enthalten ; insbesondere

2) Acryldispersionen mit hohen Gehalten an Acryl- und/oder Methacrylsäureeinheiten und hohem Feststoffgehalt, wobei der Wassergehalt der Dispersion in Prozent vom Gesamtgewicht höchstens den Prozentgehalt an Acryl- bzw. Methacrylsäureeinheiten am Gewicht des Kunststoffanteils erreicht. Diese Prozentwerte haben zwar unterschiedliche Bezugsgrößen und sind im Sinne einer Mengenbilanzrechnung nicht vergleichbar, jedoch trägt die Gegenüberstellung dieser Zahlenwerte der Erfahrungstatsache Rechnung, daß sich hoch carboxylgruppenhaltige Dispersionen umso schwerer herstellen lassen, je höher ihr Feststoffgehalt, d.h. je niedriger ihr Wassergehalt ist.

3) Acryldispersionen mit einem Kunststoffgehalt von wenigstens 60 Gew.-% (bezogen auf Gesamtgewicht) und einem Gehalt von weniger als 0,S Gew.-%, bezogen auf das Gewicht des Kunststoffanteils, an niedermolekularen anionischen Emulgatoren.

**Beispiel 1 : Dispersion mit hohem Säuregehalt**

In einem Polymerisationsgefäß mit Rührwerk, Thermometer, Heiz- bzw. Kühlmantel, wird eine Lösung von

1 g Natriumlaurylsulfat und

5 g Ammoniumperoxodisulfat in

4250 g destilliertem Wasser vorgelegt umd auf 80°C erwärmt.

Dazu tropft man bei 80°C innerhalb von 4 Stunden eine Monomer-Emulgatorlösung, hergestellt aus

1020 g Ethylacrylat

780 g Methacrylsäure

5 g 2-Ethyl-hexyl-thioglykolat

40 g Polyoxyäthylen-sorbitan-monooleat.

Nach Zulaufende wird noch 2 Stunden bei 80°C belassen. Nach Abkühlen auf Raumtemperatur resultiert eine gut handhabbare, koagulatfreie Dispersion.

Feststoffgehalt : 30%, pH : 2,4, Viskosität : 6 mPa.s

**Beispiele 2 - 6**

Man verfährt wie in Beispiel 1 beschrieben, ändert jedoch die Zusammensetzung der vorgelegten Wasserphase und die der zulaufenden Monomer-Emulgatorphase (siehe Tabelle 1). In Tabelle 1 sind auch die Analysendaten der auf diesem Wege polymerisierten Dispersionen aufgeführt.

**Tabelle 1: Dispersionen mit einem hohen Gehalt an Säuregruppen**

| Beisp. Nr. | Zusammensetzung der Monomerphase (g) | | | | | | | Vorlage (g) | Koagulatgehalt (%) | Feststoff-gehalt (%) | pH |
|---|---|---|---|---|---|---|---|---|---|---|---|
| | EA | MMA | MA | Emul-gator | Wasser | Regler[3] | APS | NaLS | | | |
| 2 | 1260 | — | 540 | 40[4] | — | — | 4[1] | 1[1] | koagulatfrei | 30 | 2,4 |
| 3 | 900 | — | 900 | 40[4] | — | 5 | 4[1] | 1[1] | koagulatfrei | 30 | 2,4 |
| 4 | 540 | — | 1260 | 40[4] | — | 5 | 4[1] | 3[1] | 3 | 29 | 2,3 |
| 5 | 630 | 630 | 540 | 1[5] | 8 | 5 | 2[1] | 1[1] | koagulatfrei | 30 | 2,6 |
| 6 | — | 1800 | 600 | 15[5] | 15 | 10 | 4[2] | 1[2] | 0,1 | 40 | 2,3 |

[1] gelöst in 4250 g destilliertem Wasser,
[2] gelöst in 3600 g destilliertem Wasser,
[3] 2-Ethyl-hexyl-thioglykolat,
[4] Polyoxyäthylen-sorbitan-monooleat
[5] Natriumaurylsulfat

EA = Ethylacrylat
MMA = Methylmethacrylat
MA = Methacrylsäure
APS = Ammoniumperoxodidulfat
NaLS = Natriumlaurylsulfat

**Beispiel 7**

In einem Polymerisationsgefäß, wie in Beispiel 1 beschrieben, werden

80 g Triisobutylphenol, mit 6 Mol Äthylenoxid oxäthyliert, sulfatiert, Na-Salz

80 g Ammoniumperoxodisulfat gelöst in

30300 g destilliertem Wasser vorgelegt und auf 80°C erwärmt.

Dazu tropft man innerhalb von 4 Stunden eine Monomer-Emulgator-Mischung bestehend aus

7000 g Butylacrylat

6300 g Acrylnitril

5000 g Methylmethacrylat

1600 g Methacrylsäure

100 g 2-Ethyl-hexyl-thioglykolat

50 g Triisobutylphenol, mit 6 Mol Äthylenoxid oxäthyliert, sulfatiert, Na-Salz

50 g destilliertem Wasser.

Nach Zulaufende wird noch 2 8tunden bei 80°C gerührt. Nach Abkühlen auf Raumtemperatur erhält man eine koagulatfreie, sehr feinteilige Dispersion.
Feststoffgehalt : 40%.

## Ansprüche

1. Verfahren zur Herstellung von Kunststoffdispersionen, deren Kunststoffanteil überwiegend aus Acrylmonomeren aufgebaut ist, von denen wenigstens ein Teil wasserunlöslich ist, nach dem Monomerzulaufverfahren, wobei man in Gegenwart eines radikalbildenden Initiators und eines Emulgiermittels eine Monomerphase, in der ein Teil des Emulgiermittels gelöst ist, unter Polymerisationsbedingungen zu einer vorgelegten Wasserphase, in der vor Polymerisationsbeginn der übrige Teil des Emulgiermittels gelöst worden ist, zulaufen läßt, dadurch gekennzeichnet, daß eine Monmomerphase eingesetzt wird, die

a) zu mehr als 20 Gew.-% (bezogen auf das Gesamtgewicht der Monomeren) aus Acryl- und/oder Methacrylnitril und/oder aus wasserlöslichen Monomeren aus der Gruppe der alpha-beta- äthylenisch ungesättigten Carbonsäuren und Dicarbonsäuren, Acryl- und Methacrylamid und ihren N-Methylolverbindungen, Hydroxyalkylestern und Aminoalkylestern der Acryl- und Methacrylsäure und Salzen und Quaternierungsprodukten dieser Aminoester und

b) zum verbleibenden Teil aus wasserunlöslichen Monomeren aus der Gruppe der Alkylester der Acryl- und Methacrylsäure mit 1 bis 18 C-Atomen im Alkylrest und Styrol besteht.

2. Verfahren nach Anspruch 1, dadurch gekennzeichnet, daß 0,5 bis 60 Gew.-% des eingesetzten Emulgiermittels in der vorgelegten Wasserphase und die verbleibenden 99,5 bis 40 Gew.-% in der Monomerenphase gelöst werden.

3. Verfahren nach den Ansprüchen 1 oder 2, dadurch gekennzeichnet, daß eine Monomerenphase eingesetzt wird, die wenigstens 6 Gew.-% einer ungesättigten Carbonsäure enthält.

4. Verfahren nach den Ansprüchen 1 bis 3, dadurch gekennzeichnet, daß man einen anionischen Emulgator in einer Menge von 0,05 bis 1,5 Gew.-%, bezogen auf die Monomenenphase einsetzt.

## Claims

1. Process for preparing plastics dispersions, the plastics content of which is synthesised predominantly from acrylic monomers, at least some of which are water-insoluble, by the monomer inflow method, in which, in the presence of a radical-forming initiator and an emulsifier, a monomer phase in which some of the emulsifier is dissolved is allowed to flow, under polymerisation conditions, into a prepared aqueous phase in which the remaining emulsifier has been dissolved before the start of polymerisation, characterised in that a monomer phase is used which consists of :

a) more than 20% by weight (based on the total weight of monomers) of acrylonitrile and/or methacrylonitrile and/or of water-soluble monomers from the group comprising the alpha-beta-ethylenically unsaturated carboxylic and dicarboxylic acids, acrylamide and methacrylamide and the N-methylol compounds thereof, hydroxyalkyl and aminoalkyl esters of acrylic and methacrylic acid and salts and quaternisation products of these aminoesters and

b) for the remainder, water-insoluble monomers from the group comprising the alkyl esters of acrylic and methacrylic acid with 1 to 18 carbon atoms in the alkyl group and styrene.

2. Process as claimed in claim 1, characterised in that 0.5 to 60% by weight of the emulsifier used are dissolved in the prepared aqueous phase and the remaining 99.5 to 40% by weight are dissolved in the monomer phase.

3. Process as claimed in claim 1 or 2, characterised in that a monomer phase is used which contains at least 6% by weight of an unsaturated carboxylic acid.

4. Process as claimed in claims 1 to 3, characterised in that an anionic emulsifier is used in a quantity of from 0.05 to 1.5% by weight, based on the monomer phase.

## Revendications

1. Procédé pour la préparation de dispersions de matières plastiques dont la fraction matière plastique est faite principalement de monomères acryliques parmi lesquels une partie au moins est insoluble dans l'eau, suivant la technique de l'introduction par écoulement des monomères, dans lequel on introduit par écoulement, en présence d'un initiateur radicalaire et d'un émulsifiant, une phase de monomères dans laquelle une partie de l'émulsifiant est dissoute, dans des conditions de polymérisation, dans une phase aqueuse préalablement chargée, dans laquelle la partie restante de l'émulsifiant a été dissoute avant le début de la polymérisation, caractérisé en ce qu'on utilise une phase de monomères qui se compose

a) pour plus de 20% en poids (sur la base du poids total des monomères) d'acrylonitrile et/ou de méthacrylonitrile et/ou de monomères hydrosolubles du groupe des acides carboxyliques et dicarboxyliques à insaturation α,β-éthylénique, de l'acrylamide du méthacrylamide et de leurs composés hydroxyméthyliques, des esters hydroxyalkyliques et esters aminoalkyliques de l'acide acrylique ou méthacrylique et des sels et produits quaternaires de ces aminoesters, et

b) pour la partie restante, de monomères insolubles dans l'eau du groupe des esters alkyliques de l'acide acrylique ou méthacrylique ayant de 1 à 18 atomes de carbone dans le radical alkyle, et du styrène.

2. Procédé selon la revendication 1, caractérisé en ce que 0,5 à 60% en poids de l'émulsifiant utilisé sont dissous dans la phase aqueuse chargée préalablement et les 99,5 à 40% en poids restants sont dissous dans la phase des monomères.

3. Procédé selon la revendication 1 ou 2, caractérisé en ce qu'on utilise une phase de monomères qui contient au moins 6% en poids d'un acide carboxylique insaturé.

4. Procédé selon l'une quelconque des revendications 1 à 3, caractérisé en ce qu'on utilise un émulsifiant anionique dans une proportion de 0,05 à 1,5% en poids sur la base de la phase des monomères.